# EUROPEAN PATENT SPECIFICATION

(11) **EP 4 571 040 B1**
(45) Date of publication and mention of the grant of the patent: **25.03.2026**
(21) Application number: 23215517.6
(22) Date of filing: 11.12.2023
(51) Int. Cl.: E21B 7/02, E21B 44/00, E21B 47/022, G01C 25/00

(54) **CONTROLLING OF A MINING MACHINE**
STEUERUNG EINER ABBAUMASCHINE
COMMANDE D'UNE MACHINE D'EXPLOITATION MINIÈRE

(43) Date of publication of application: 18.06.2025
(73) Proprietor: Sandvik Mining and Construction Oy, 33330 Tampere (FI)
(72) Inventor: HANSKI, Sami, 33330 Tampere (FI); PESOLA, Mikko, 33330 Tampere (FI); VIINIKAINEN, Mikko, 33330 Tampere (FI); Collin, Jussi, 37830 Akaa (FI); NGUYEN, Nhan, 33330 Tampere (FI); PIHLSTRÖM, Timo, 33330 Tampere (FI)
(74) Representative: Sandvik

(56) References cited:
- EP-A1- 4 148 231
- AU-A4- 2012 101 210
- CA-A1- 2 936 491
- US-A1- 2014 157 860
- US-A1- 2017 314 331

## Description

### TECHNICAL FIELD

Various example embodiments generally relate to the field of controlling mining machines. Some example embodiments relate to controlling a mining machine based on motional status of the mining machine.

### BACKGROUND

Mining machines may be equipped with inertial measurement units (IMU) to control operations of the mining machine, such as for example motion of the mining machine, or parts thereof. For example, in case of an underground drill rig, sensors may be used to control the drilling angle with respect to a drilling face. Such a sensor-based control system may be however prone to errors. US 2017/314331 A1 and AU 2012 101 210 A4 are useful for understanding the background.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, an apparatus for controlling a mining machine is disclosed. The apparatus may comprise: at least one processor; and at least one memory including computer program code, the at least one memory and the computer program code configured to, with the at least one processor, cause the apparatus at least to: receive an inertial measurement signal from a sensor of the mining machine; determine a motional status of the mining machine indicative of whether at least one part of the mining machine is stationary; and perform calibration of the inertial measurement signal, in response to determining that the motional status of the mining machine is indicative of the sensor being stationary.

According to a second aspect, a method for controlling a mining machine is disclosed. The sensor may comprise: receiving an inertial measurement signal from a sensor of the mining machine; determining a motional status of the mining machine indicative of whether at least one part of the mining machine is stationary; and performing calibration of the inertial measurement signal, in response to determining that the motional status of the mining machine is indicative of the sensor being stationary.

According to a third aspect, an apparatus for controlling a mining machine is disclosed. The apparatus may comprise: means for receiving an inertial measurement signal from a sensor of the mining machine; means for determining a motional status of the mining machine indicative of whether at least one part of the mining machine is stationary; and means for performing calibration of the inertial measurement signal, in response to determining that the motional status of the mining machine is indicative of the sensor being stationary.

According to a fourth aspect, a computer program, a computer program product, or a (non-transitory) computer-readable medium for controlling a mining machine is disclosed. The computer program, computer program product, or (non-transitory) computer-readable medium may comprise program instructions which, when executed by an apparatus, cause the apparatus at least to: receive an inertial measurement signal from a sensor of the mining machine; determine a motional status of the mining machine indicative of whether at least one part of the mining machine is stationary; and perform calibration of the inertial measurement signal, in response to determining that the motional status of the mining machine is indicative of the sensor being stationary.

Example embodiments of the above aspects are described in the claims, the description, and/or the drawings. According to some aspects, there is provided the subject matter of the independent claims. Some further aspects are defined in the dependent claims. Many of the attendant features will be more readily appreciated as they become better understood by reference to the following description considered in connection with the accompanying drawings.

### LIST OF DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of an underground drill rig;
FIG. 2 illustrates an example of a drilling unit;
FIG. 3 illustrates examples of heading angle, roll angle, and tilt angle of a drilling tool;
FIG. 4 illustrates an example of a control algorithm for controlling a mining machine;
FIG. 5 illustrates an example of a block diagram of an apparatus for controlling a mining machine;
FIG. 6 illustrates an example of signals associated with controlling a mining machine;
FIG. 7 illustrates an example of an apparatus configured to practise one or more example embodiments; and
FIG. 8 illustrates an example of a method for controlling a mining machine.

Like references are used to designate like parts in the accompanying drawings.

### DESCRIPTION

Reference will now be made to embodiments, examples of which are illustrated in the accompanying drawings. The description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Inertial measurement units, or inertial sensors in general, may be applied in mining machines for providing input signals to various control tasks. An inertial measurement unit is configured to detect linear acceleration and angular velocity using a plurality of inertial sensors such as one or more accelerometers and one or more gyroscopes. An inertial measurement unit may further comprise a magnetometer for detecting a compass heading. For example, when drilling angles are measured with an IMU comprising accelerometer(s) and gyroscope(s), the tilt , roll, and heading angles may be determined based on the outputs of the accelerometer(s) and the gyroscope(s). A gyroscope may be configured to output values of its angular velocity.

Measurements of the tilt and roll angles may be considered to be absolute measurements, because they may be measured against the gravity. Measurement of the heading angle may be based on relative measurements of the gyroscope. The measurement of the heading angle may drift, because the output signal may include noise and bias error components arising from non-ideal biasing of the gyroscope. Errors may be also caused by rotation of the earth. The amount of error generally depends on the quality of the gyroscope. The bias error component of the signal may be compensated in order to calibrate the output signal of the gyroscope and thereby to improve accuracy of heading angle measurements. It is however noted that even though some example embodiments have been described using the heading angle as an example of the measured quantity and gyroscope as an example of the sensor, the functionality described herein may be alternatively applied to other measured quantities and other type of sensors.

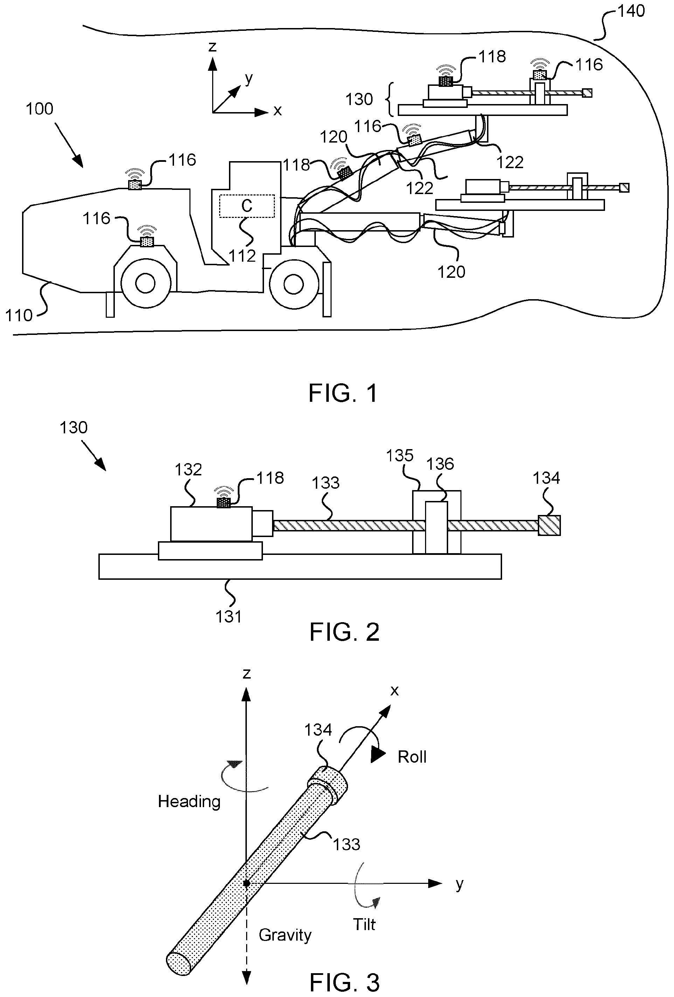

FIG. 1 illustrates an example of an underground drill rig. Underground drill rig 100 may be a rock drilling rig. In this example, axis x represents the forward driving direction of underground drill rig 100. Axisy represents the other horizontal axis, in this example towards the left wall of the tunnel with respect to the forward driving direction. Axis z represents the vertical direction, in this example towards the roof of the tunnel. Underground drill rig 100 may comprise a movable carrier 110 and at least one boom 120 connected to movable carrier 110. Movable carrier 110 may comprise equipment for moving or stabilising underground drill rig 100, such as for example a motor, wheels, or stabilizer jack(s). Even though two booms 120 have been illustrated in FIG. 1, underground drill rig 100 may generally comprise one or a plurality (e.g., two, three, four,...) of booms 120.

A tool, represented throughout the description by drilling unit 130, may be coupled to a distal end portion of boom 120. Drilling unit 130 may comprise a feeding system configured to keep a drill bit of drilling unit 130 in contact with the drilling face, in this example tunnel surface 140, and to enable a drill rod to move along a feed beam during drilling. Boom(s) 120 may comprise a plurality of boom parts coupled to each other, movable carrier 110, and/or drilling unit 130 by joint(s) 122. Controllable joints enable drilling unit 130 to be placed at a desired position and orientation with respect to the drilling face. Orientation of drilling unit may be characterized by the heading angle, roll angle, and tilt angle, as will be further described with reference to FIG. 3. Other examples of tools include a gripper, which may be configured to hold a mesh when meshing tunnel surface 140, and a bolter, which may be configured to mount bolts to tunnel surface 140, for example for mounting meshes to tunnel surface 140.

Underground drill rig 100 may comprise a controller (C) 112. Controller 112 may be configured to control various functions of underground drill rig 100, such as for example navigation, motion (e.g., driving), or drilling. Controller 112 may for example comprise a navigation application configured to control, or enable a human operator to control, motion of underground drill rig 100, for example carrier 110, or other component(s) or tool(s) of underground drill rig 100, such as for example boom(s) 120 or drilling unit 130. Controller 112 may comprise control circuitry for performing functionality of controller 112, as described herein.

Underground drill rig 100, may comprise sensor(s) 116, which may be mounted at various parts of underground drill rig 100, for example carrier 110. Alternatively, or additionally, sensor(s) 116 may be located at particular component(s) of underground drill rig 100, such as for example boom 120, or a tool of underground drill rig 100 (e.g., drilling unit 130). Sensor(s) 116 may comprise various types of sensors, such as for example an inertial measurement unit (IMU), an accelerometer, a gyroscope, a camera, a radio detection and ranging (radar) sensor, a light detection and ranging (lidar) sensor, or the like.

IMU, accelerometer, and/or gyroscope may be configured to measure or monitor angle(s) and/or positions of component(s)/tool(s) of underground drill rig 100. For example, an IMU may be configured to measure the heading, tilt, and roll angles of drilling unit 130. Another example of a sensor is a boom angle sensor, which may be configured to measure angle(s), e.g., inclination angle, of boom 120. Boom angle sensor may be located at boom 120.

Some sensor(s) 116 may be configured to scan environment of underground drill rig 100, for example tunnel surface 140. A camera may be used to extract depth information of tunnel surface 140, e.g., by comparing two images taken at slightly different position (e.g., by two camera units). Alternatively, sensor(s) 116 may comprise a time-of-flight (ToF) camera, which may be configured to determine a distance between the camera and points of tunnel surface 140 or other objects by measuring the round-trip time of an artificial light signal provided by a laser or a light-emitting diode (LED). A lidar sensor may be configured to determine a distance to different points of tunnel surface 140 or other objects by targeting them with a laser and measuring the time for the reflected light to return to a receiver of the lidar sensor. A radar sensor may be configured to transmit electromagnetic energy towards tunnel surface 140 or other objects and to observe the returned echoes to determine distances to different points of tunnel surface 140 or other objects.

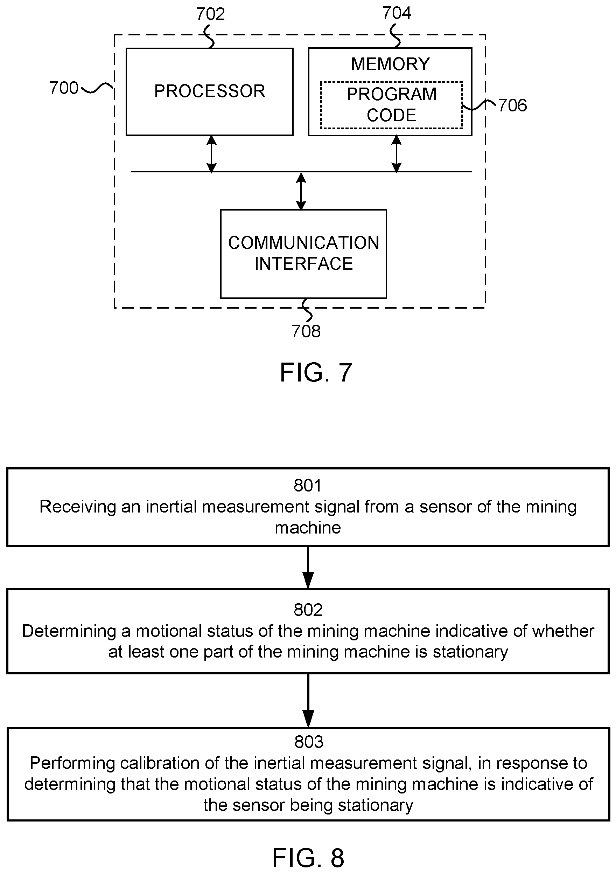

Controller 112 may be provided at underground drill rig 100 for example as an integrated circuit (IC), or, as a software application residing on at least one memory and being executable by a processor. An example of an apparatus suitable for implementing controller 112 is provided in FIG. 7. Controller 112 may comprise, or be communicatively coupled to, various functions, blocks, or applications for controlling functionality of underground drill rig 100. Alternatively, controller 112 may be located at a remote control device configured to remotely control underground drill rig 100.

Sensor(s) 116 may be battery powered. This provides the benefit of more robust installation of the sensor system, because installation of wires for supplying power may be avoided. Wires may be prone to damage when moving components of underground drill rig 100 for example boom(s) 120. Sensor(s) 116 may be equipped with communication circuitry, for example wireless radio transmitter and/or receiver circuitry coupled to one or more antennas, in order to enable sensor(s) 116 to wirelessly transmit and/or receive information, for example data captured by sensor(s). The communication circuitry may be configured to provide a wireless communication interface between sensor(s) 116 and underground drill rig 100, for example controller 112. An example of a suitable wireless communication interface for implementing wireless communication links described herein is Bluetooth^{®} Low Energy (LE). It is however noted that example embodiments of the present disclosure may be applied to wired sensors, for example to guarantee sufficient power delivery to a high-power sensor, such as for example an IMU.

Underground drill rig 100 may be an automated mining machine. An automated mining machine, operating in an automatic mode may be configured to, for example, receive a task to be performed, perceive the environment of the mining machine (e.g., mining vehicle) and autonomously perform the task while taking the environment into account. An automated mining machine operating in an automatic mode may be configured to operate independently but may be taken under external control at certain operation areas or conditions, such as during states of emergencies.

FIG. 2 illustrates an example of a drilling unit. Drilling unit 130 may comprise a feed beam 131 and a rock drilling machine 132 supported on it. The rock drilling machine 132 may comprise a shank at a front end of the rock drilling machine 132 for connecting a tool, such as for example drill rod 133 comprising, or configured to be coupled to, drill bit 134. Further, drilling unit 130 may comprise one or more rod handling devices 135, such as for example a tool hold device, a tool changing apparatus or manipulator, and/or a tool magazine or storage. In addition to this, one or more additional devices 136 may be supported to the feed beam 131. Sensor(s) 116 may be coupled to drilling unit 130 at any suitable position. In particular, an inertial sensor 118 (e.g., gyroscope) may be coupled to drilling unit 130 such that controller 112 is enabled to determine the orientation of drill rod 131 based on the output of inertial sensor 118. Inertial sensor 118 may be alternatively coupled to boom 120, as illustrated in FIG. 1, or a cradle of boom 120, for example to reduce vibration of inertial sensor 118.

FIG. 3 illustrates examples of heading angle, roll angle, and tilt angle of a drilling tool. The three mutually orthogonal axes *x, y, z* represent the forward driving direction of underground drill rig 100, the other horizontal direction, and the vertical direction, respectively, as already described with reference to FIG. 1. Vertical axis z may be opposite to the vector of gravity. Horizontal axes *x, y* may be perpendicular to the vector of gravity. The roll angle of drill rod 133 may be defined as the angle around the x-axis, i.e., the axis towards the driving direction of underground drill rig 100. The tilt angle of drill rod 133 may be defined as the angle around the y-axis, i.e., the horizontal axis perpendicular to the driving direction of underground drill rig 100. The tilt angle may be alternatively called a pitch angle. The tilt angle or pitch angle may comprise an absolute angle with respect to a local coordinate frame, a coordinate frame that is stationary with respect to ground (e.g., tunnel surface 140). The heading angle of drill rod 133 may be defined as the angle around the z-axis, i.e., the vertical axis.

As mentioned above, monitoring the heading angle of drill rod 133 may be prone to errors due to drifting of the output signal of a gyroscope, for example because of non-optimal biasing of the gyroscope. Gyroscope bias error compensation may be implemented by averaging the output signal of the gyroscope for a period of time, for example a period of time with known input (e.g., zero). Alternatively, or additionally, accuracy of gyroscope measurements may be improved based on information on motional status of the gyroscope as obtained from sources external to the gyroscope, for example the gyroscope being stationary. This approach may be referred to as zero-velocity detection, zero-velocity compensation, or zero-velocity calibration.

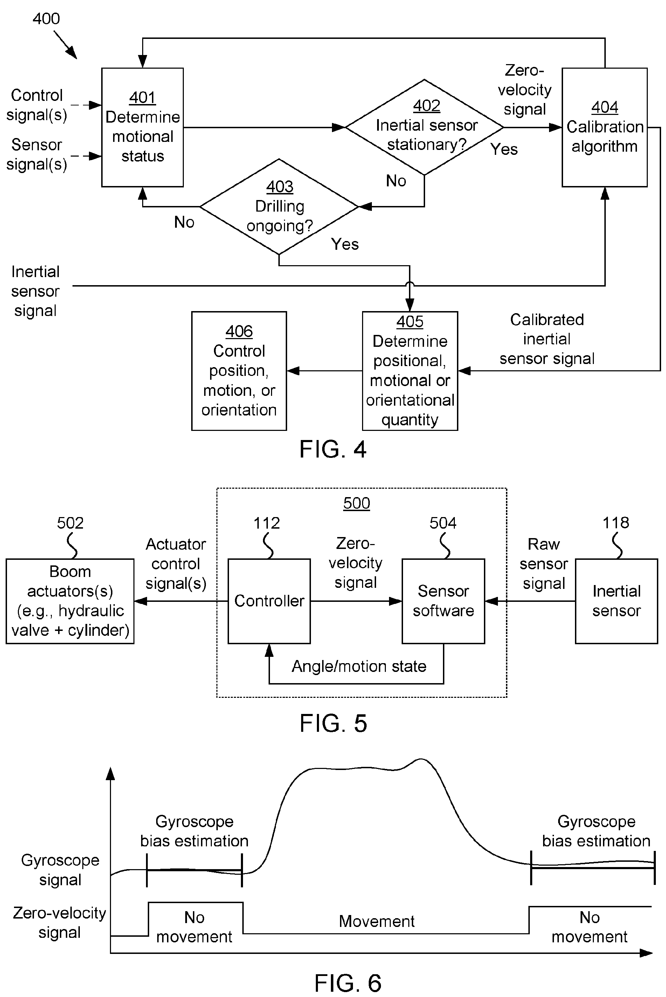

FIG. 4 illustrates an example of a block diagram of a control algorithm for controlling a mining machine. Even though operations of FIG. 4 have been described as being performed by controller 112, it is understood that same functionality may be implemented by any suitable physical or logical apparatus, subsystem, or device, located within or external to the mining machine. Furthermore, even though underground drill rig 100 is used as an example of a mining machine, similar functionality may be performed for any type of mining machines, such as for example mining trucks, mining loaders, bolter miners, road headers, or multitaskers.

At operation 401, controller 112 may be configured to determine motional status of underground drill rig 100. The motional status of underground drill rig 100 may comprise information indicative of whether underground drill rig 100, e.g., carrier 110, or any component(s) or tool(s) of underground drill rig 100, are stationary or moving. Controller 112 may be configured to obtain (e.g., receive) control signal(s) and/or sensor signal(s) and to determine the motional status based on the signal(s). The motional status may comprise the current motional status of underground drill rig 100. Current motional status may refer to the motional status at the time of capturing the sensor data of the sensor signal(s) or at the time of provision of the control signal(s). The motional status may be with respect to an inertial coordinate frame, e.g., a coordinate frame that is stationary with respect to ground. For example, controller 112 may be configured to determine that underground drill rig 100, or component(s)/tool(s) thereof are stationary with respect to the inertial coordinate frame.

Controller 112 may be configured to receive the control signal(s) from control circuitry of underground drill rig 100. Controller 112 may be integrated within the control circuitry, or the control circuitry may be provided separate from controller 112. Controller 112 may be configured to retrieve the control signal(s) from a memory of the control circuitry, for example as values of control signals stored on the memory. Alternatively, controller 112 may be configured to receive the control signal(s) over a communication interface, such as for example an internal control data bus of underground drill rig 100, or an external communication interface, if controller 112 is located external to underground drill rig 100. The control circuitry may be therefore configured to provide the control signal(s) to controller 112 by any suitable means.

The control signal(s) may be indicative of the motional status of underground drill rig 100. The control signal(s) may for example comprise status data of component(s) or tool(s) of underground drill rig 100, for example as recorded in a memory of underground drill rig 100. The status data may be for example indicative of particular hydraulic valve(s) being inactive or controlled, the motor of underground drill rig 100 being running, boom(s) 120 being stationary or moving, or the like. Alternatively, controller 112 may be configured to determine that the component(s) or tool(s) are inactive (e.g., stationary) based on absence of control signal(s) (e.g., for a predetermined time) configured to indicate that the component(s) or tool(s) are active. For example, controller 112 may be configured to determine that boom 120 is stationary, in response to not receiving control signal(s) indicative of the hydraulic valve(s) of boom 120 being active.

The control signal(s) may comprise control data associated with manual control of motion of underground drill rig 100, or component(s) or tool(s) thereof, such as for example current positions of one or more mechanical controllers (e.g., pedal(s), joystick(s), or the like). The control signal(s) may comprise control instructions formatted as commands for automatic performance of tasks by underground drill rig 110, such as for example a command for initiating automatic drilling.

The control signal(s) may comprise an indication of a current operational mode of underground drill rig 100. While some control signals may implicitly reflect the motional status of underground drill rig 100, e.g., by providing information associated with current functionality of underground drill rig 100, an operational mode may comprise an explicit designation of a mode of operation assigned to underground drill rig 100, or component(s)/tool(s) thereof. The operational mode may be based on an enumerated list of possible operating modes, such as for example 'active', 'inactive', 'enabled', 'disabled', 'drilling', 'tramming', 'failure', or the like. Being active may generally refer to a state, where the respective equipment is currently operating (e.g., performing a function such as drilling). Being inactive may generally refer to a state, where the respective equipment is currently not operating. Being enabled may generally refer to a state, where the respective equipment is currently operational, but not necessarily being currently operated. Being disabled may generally refer to a state, where operation of the respective equipment is prevented or restricted.

The operational mode of underground drill rig 100 may correspond to a current state of an internal state machine of underground drill rig 100. A state machine may comprise a software component that models system behaviour by defining a finite set of predefined states of the system and transition between the states. A state comprises a description of a status of a system such as an underground drill rig that is performing an operation or waiting for a transition from a first state to a second state. A state of an underground drill rig may comprise, for example, a current state of the underground drill rig. A current state of the underground drill rig may comprise, for example, an idle state in which the underground drill rig is waiting for a signal to start an operation. As another example, a current state may comprise an operation state indicative of operational status of the underground drill rig performing a predefined operation.

The control signal(s) may be associated with powering component(s) or tool(s) of underground drill rig 100. For example, the control signal(s) may comprise an indication of a status of hydraulic power pack(s) of drill rig, 100, 200 for example 'disabled' or 'enabled'. The status of the hydraulic power pack(s), or in general any other powering equipment, may be associated with particular component(s) or tool(s) of underground drill rig 100, for example boom 120 or drilling unit 130. A hydraulic power pack may comprise hydraulic pump(s) or a hydraulic power unit.

Controller 112 may be configured to determine the motional status of underground drill rig 100 based on the control signal(s). Controller 112 may be configured to determine the motional status based on the implicit indications of the motional status, such as for example enablement, disablement, activity, or inactivity, of component(s) configured to cause motion of underground drill rig 100, or component(s)/tool(s) thereof. For example, controller 112 may be configured to determine that drilling unit 130 is stationary, if the control signal(s) are indicative of carrier 110 not moving and hydraulic valves of boom 120 and drilling unit 130 being inactive. In case of hydraulic valves, a valve being inactive may refer to a state, where the hydraulic valve is not controlled and therefore the hydraulic pressure remains constant, causing the controlled component or tool to be stationary. Alternatively, controller 112 may be configured to determine that drilling unit 130 is stationary, if the control signal(s) are indicative of carrier 110 not moving and power pack(s) of boom 120 and drilling unit 130 being disabled.

Alternatively, or additionally, controller 112 may be configured to determine the motional status of underground drill rig 100 based on the sensor signal(s). Sensor(s) 116 may be configured to read sensor data and to transmit the sensor data to controller 112. Sensor(s) 116 may be configured to read the sensor data at one or more time instants, for example periodically. The type of the sensor data may be dependent on the type of sensor. For example, an accelerometer may be configured to read sensor data as one or more values of acceleration, for example with respect to three mutually orthogonal axes of an inertial coordinate frame.

Controller 112 may be configured to determine the motional status of underground drill rig 100 based on the sensor signal(s). Controller 112 may be configured to receive the sensor signal(s) from sensor(s) 116. Controller 112 may be configured to use the sensor signal(s) for calibrating an inertial measurement signal of inertial sensor 118. For example, controller 112 may be configured to determine whether carrier 110, boom 120, or drilling unit 130 are stationary or moving based on sensor signal(s) received from accelerometer(s) coupled to carrier 110, boom 120, or drilling unit 130, respectively.

Sensor(s) 116 may comprise visual sensor(s), e.g., camera(s) configured to capture visual data, such as for example image or video data. Controller 112 may be configured to receive the visual data from the visual sensor(s). Controller 112 may be configured to detect, based on the visual data, motion of boom(s) 120 of underground drill rig 100, for example relative to carrier 110 or the environment of underground drill rig 100. Underground drill rig 100 may for example comprise a computer-vision system, which may be at least partially implemented by controller 112. The computer-vision system may be configured to detect motion of boom(s) 120. Boom(s) 120 may for example comprise visual target(s), e.g., led(s), configured to be detected by the computer-vision system. Alternatively, the computer-vision system may be at least partially located external to underground drill rig 100, for example at a remote server.

Camera(s) and/or other sensor(s), such as for example radar or lidar sensor(s) may be configured to scan the environment of underground drill rig 100 to obtain scanning data. The scanning data may be indicative of three-dimensional positions of tunnel surface 140 or objects located at the environment of underground drill rig 100. Controller 112 may be configured to determine a point-cloud representation of the environment based on the scanning data. Controller 112 may be further configured to detect motion of a representation of component(s) or tool(s) of underground drill rig 100, e.g., boom(s) 120, in the point-cloud representation. An example of a system configured to determine point-cloud representations of the environment of underground drill rig 100 is the simultaneous localization and mapping (SLAM) system.

Controller 112 may be configured to determine the motional status of boom(s) 120, or other component(s) or tool(s) of underground drill rig 100 based on the computer-vision system and/or the point-cloud representation. This provides the benefit of obtaining information about motional status of various components or tools of underground drill rig 110 without needing to install sensors in components or tools, whose motional status is to be detected.

Sensor(s) 116 may comprise accelerometer(s) located at fixed relative position(s) with respect to inertial sensor 118. For example, if inertial sensor 118 is a gyroscope, the accelerometer(s) of the same IMU may be used as sensor(s) 116 for providing the zero-velocity signal for calibrating the gyroscope signal. Sensor(s) 116 may comprise odometer(s), which may be configured to detect motion of carrier 110. An odometer may be configured to measure a distance traveled by underground drill rig 100. Controller 112 may be configured to determine, based on odometer reading(s), whether carrier 110 is stationary or not. For example, controller 112 may be configured to determine that carrier 110 is stationary, in response to determining that the odometer reading does not change. Sensor(s) 116 may comprise boom angle sensor(s), which may be coupled to boom(s) 120 of underground drill rig 100. Providing individual sensors at particular components or tools of underground drill rig 100 provides the benefit of reliably obtaining information of motional status of the particular components or tools.

Controller 112 may be therefore configured to determine the motional status of underground drill rig 100 by obtaining information on the motional status directly, for example by receiving sensor signal(s) indicative of particular part(s) of underground drill rig 100 being currently stationary or moving. Alternatively, or additionally, controller 112 may be configured to determine the motional status of underground drill rig 100 by deducing the motional status based on the control signal(s) and/or the sensor signal(s).

At operation 402, controller 112 may be configured to determine whether inertial sensor 118 is stationary. Controller 112 may be configured to determine that inertial sensor 118 is stationary, if the motional status of underground drill rig 100 is indicative of inertial sensor 118 being stationary. For example, controller 112 may be configured to determine that inertial sensor 118, which is coupled to drilling unit 130, is stationary, in response to determining that drilling unit 130 is stationary. As described above, determining that drilling unit 130 is stationary may be in response to determining that control signal(s) and/or sensor signal(s) associated with carrier 110, boom 120, and/or drilling unit 130 are indicative of drilling unit 130 being stationary. As another example, controller 112 may be configured to determine that inertial sensor 118, when coupled to carrier 110, is stationary, in response to receiving control signal(s) indicative of carrier 100 being stationary, for example the motor of underground drill rig 100 not being running.

Controller 112 may be configured to move back to execution of operation 401, optionally via operation 403, in response to determining that inertial sensor 118 is not stationary. Controller 112 may be configured to move to execution of calibration algorithm 404, in response to determining that inertial sensor 118 is stationary. Controller 112 may be configured to provide a zero-velocity signal to calibration algorithm 404, in response to determining inertial sensor 118 to be stationary.

Controller 112 may be configured to execute calibration algorithm 404. Calibration algorithm 404 may be implemented by any suitable means, for example as executable program code residing on memory of controller 112. Controller 112 may be configured to execute calibration algorithm 404, in response to determining that inertial sensor 118 is stationary.

At operation 403, controller 112 may be configured to determine whether underground drill rig 100 is drilling. Controller 112 may be configured to move to execution of operation 405, in response to determining that underground drill rig 100 is drilling. Controller 112 may be configured to move to execution of operation 401, in response to determining that underground drill rig 112 is not drilling. The motional or orientational quantity measured by inertial sensor 118 may be constant when drilling is ongoing. Controller 112 may be configured not to apply the inertial sensor signal when drilling is ongoing. Determining whether underground drill rig 100 is drilling may comprise determining whether underground drill rig 110 is currently drilling, in other words whether drilling is ongoing.

Calibration algorithm 404 may be configured to receive as input an inertial measurement signal from inertial sensor 118. The inertial measurement signal may comprise any signal indicative of an inertial quantity, such as for example acceleration or angular velocity, or a quantity determined by inertial sensor 118 based on a measured inertial quantity, such as for example a signal indicative of the current heading angle.

Calibration algorithm 404 may be further configured to receive the zero-velocity signal, whenever controller 112 has determined that inertial sensor 118 is stationary. Controller 112 may be therefore configured to perform calibration of the inertial measurement signal (e.g., by executing calibration algorithm 404), in response to determining that the motional status of underground drill rig 100 is indicative of inertial sensor 118 being stationary. Performing calibration of the inertial measurement signal may for example comprise determining a calibration term, which may be configured to be applied (e.g., added) to the inertial measurement signal to compensate for errors in the sensor readings, e.g., a systematic error such as drifting. Controller 112 may be configured to apply the calibration term(s) to compensate for the error during the time period when inertial sensor 118 is stationary, but also subsequent to this time period when inertial sensor 118 is moving again. Calibration (e.g., zero-velocity calibration) of the inertial measurement signal may therefore comprise applying, during movement of inertial sensor 118, calibration term(s) determined when inertial sensor 118 is stationary.

After performing the calibration, controller 112 may be configured to continue monitoring the motional status of underground drill rig 100 (cf. operation 401) and provision of the zero-velocity signal to calibration algorithm 404, whenever controller 112 determines that inertial sensor 118 is stationary (cf. operation 402). Controller 112 may be configured to, for example in parallel with iterating operations 401 to 404, use the calibrated inertial sensor signal for controlling position, motion, or orientation of underground drill rig 100, or component(s)/tool(s) thereof (cf. operations 405 and 406).

At operation 405, controller 112 may be configured to determine a positional, motional, or orientational quantity based on the calibrated inertial measurement signal. The determined quantity may be associated with a particular part of underground drill rig 100, for example drilling unit 130.

An example of a positional quantity is the position of carrier 110, for example in a coordinate frame stationary with respect to ground. For example, inertial sensor 118 may comprise an accelerometer and controller 112 may be configured to determine the position of carrier 110 by tracking the position of carrier 110 based on its accelerations. In this case, controller 112 may be configured to calibrate the accelerometer signals by providing the zero-velocity signal to calibration algorithm 404, in response to determining that an odometer of carrier 110 indicates carrier 110 to be stationary. Controller 112 may be then configured to use the calibrated accelerometer signal to determine the subsequent locations of underground drill rig 100 when carrier 110 is moving again. Similarly, controller 112 may be configured to determine the position of drilling unit 130 based on signal(s) of an accelerometer coupled to drilling unit 130. In this case, controller 112 may be configured to calibrate the accelerometer signals by providing the zero-velocity signal to calibration algorithm 404, in response to determining that visual data captured by visual sensor(s) or point-cloud data determined based on scanning data of the environment indicate drilling unit 130 to be stationary.

An example of a motional quantity is the speed of carrier 110. In this example, inertial sensor 118 may comprise an accelerometer and controller 112 may be configured to determine the speed of carrier 110, e.g., with respect to ground, by tracking the speed of carrier 110 based on its accelerations. Also in this case, controller 112 may be configured to calibrate the accelerometer signals by providing the zero-velocity signal to calibration algorithm 404, in response to determining that the odometer of carrier 110 indicates carrier 110 to be stationary. Controller 112 may be then configured to use the calibrated accelerometer signal when subsequently tracking the accelerations to determine the current speed of underground drill rig 100.

An example of an orientational status is the heading angle of underground drill rig 100, for example the heading angle of a tool of underground drill rig 100 (e.g., drilling unit 130). In this case, inertial sensor 118 may comprise a gyroscope and controller 112 may be configured to determine the orientation of the tool (e.g., with respect to underground drill rig 100 or the drilling face) based on the gyroscope readings directly. In this case, controller 112 may be configured to calibrate the gyroscope signal by providing the zero-velocity signal to calibration algorithm 404, in response to determining that accelerometer(s) coupled to the tool indicate the tool to be stationary. Alternatively, a visual sensor system or a scanned point-cloud representation may be used to detect that the tool is stationary, and to trigger the zero-velocity signal accordingly. Controller 112 may be then configured to use the calibrated gyroscope signal to determine the current orientation of the tool.

Alternatively, or additionally, controller 112 may be configured to determine the orientation of carrier 110 based on a gyroscope coupled to carrier 110. In this case, controller 112 may be configured to calibrate the gyroscope signal by providing the zero-velocity signal to calibration algorithm 404, in response to determining that accelerometer(s) coupled to carrier 110 indicate carrier 110 to be stationary.

Controller 112 may be further configured to determine the orientation of boom 120 based on a gyroscope coupled to boom 120. In this case, controller 112 may be configured to calibrate the gyroscope signal by providing the zero-velocity signal to calibration algorithm 404, in response to determining that accelerometer(s) coupled to carrier 110 indicates carrier 110 to be stationary and a boom angle sensor coupled to boom 120 indicates boom 120 to be stationary with respect to carrier 110.

In general, controller 112 may be configured to perform calibration of inertial measurement signals, in response to determining, based on any information available from the control signal(s) or sensor signal(s), that inertial sensor 188 is stationary. This provides the benefit of improving accuracy of inertial measurements.

At operation 406, controller 112 may be configured to control position, motion, and/or orientation of underground drill rig 100 based on the calibrated inertial measurement signal. Controller 112 may be configured to control the positional, motion, or orientation of carrier 110, or component(s) or tool(s) of underground drill rig 100, based on any of the positional, motional, or orientational quantities determined at operation 405.

Controller 112 may be for example configured to receive, e.g., from a human operator, instructions to position drilling unit 130 at a desired heading angle. Controller 112 may be configured to determine, based on the current heading angle of drilling unit 130 determined at operation 405, how much the current heading angle deviates from the desired heading angle and control orientation of drilling unit 130 such that drilling unit 130 is caused to rotate to the desired heading angle. As the current heading angle is determined based on the calibrated gyroscope signal, the accuracy of placing drilling unit 130 at the desired heading angle is improved. Similarly, controller 112 may be configured to control motion of carrier 110, or any component or tool of underground drill rig 100, to a desired position and/or orientation. Example embodiments of the present disclosure therefore provided the benefit of improve accuracy of controlling a mining machine, and parts thereof.

FIG. 5 illustrates an example of a block diagram of an apparatus for controlling a mining machine. Apparatus 500 may comprise, or be communicatively coupled to, boom actuator(s) 502. A boom actuator may be mechanically coupled to boom 120 and configured to cause movement of boom 120, and/or tool(s) coupled to the boom(s), according to received actuator control signa(s), for example by means of hydraulic valve(s) and a cylinder(s). Apparatus 500 may comprise controller 112 and sensor software 504. Sensor software 504 may be configured to perform calibration algorithm 404 Sensor software 504 may be provided, for example, as part of program code 706. Calibration algorithm 404 may comprise a sensor fusion algorithm and/or a bias estimation algorithm, which may be performed on the raw sensor signal (inertial measurement signal) received from inertial sensor 118 (e.g., comprising a three-axis gyroscope and a three-axis accelerometer). A sensor fusion algorithm may be configured to combine data from a plurality of sensors such as one or more accelerometers, gyroscopes and/or magnetometers, for example in order to estimate position, angle(s) (e.g., orientation), or a motion state (e.g., velocity or angular velocity) of an object, for example mining machine 100, or component(s) or tool(s) thereof. Sensor software 504 may be configured to determine the positional, motional, or orientational quantity, as described with reference to operation 405, for example a state of an angle (e.g., heading angle) or a state of motion. Sensor software 504 may be configured to provide the determined quantity (e.g., angle/motion state) to controller 112, which may be configured to control position, motion, or orientation at least part of the mining machine, as described with reference to operation 406. Controller 112 may be for example configured to provide the actuator control signal(s) to boom actuator(s) 502 to cause a desired movement of boom(s) 120, or tool(s) mechanically coupled to boom(s) 120.

FIG. 6 illustrates an example of signals associated with controlling a mining machine. In this example, the gyroscope signal represents the inertial measurement signal received from inertial sensor 118. As illustrated in FIG.6, controller 112 may be configured to provide the zero-velocity signal to sensor software 504, in response to detecting, based on sources external to inertial sensor 118, that inertial sensor 118 is not moving. Controller 112 may be configured to provide the zero-velocity signal for example by changing the level of a predetermined control signal to a level indicative of inertial sensor 118 being stationary (e.g., from a 'low' level to a 'high' level, as in FIG. 6). Sensor software 504 may be configured to transition the sensor fusion algorithm to a gyroscope bias estimation state, in response to receiving the zero-velocity signal. The sensor fusion algorithm may be configured to remain in the gyroscope bias estimation state during provision of the zero-velocity signal. In the gyroscope bias estimation state, the sensor fusion algorithm may be configured to estimate the bias of one or more axes of the gyroscope, for example by averaging respective signal(s) over time. When inertial sensor 118 starts moving again, e.g., as indicated by terminating provision of the zero-velocity signal by controller 112, the sensor fusion algorithm may be configured to disable the bias estimation state and apply the updated bias estimate to compensate sensor bias error in the gyroscope signal.

FIG. 7 illustrates an example of an apparatus configured to practise one or more example embodiments. Apparatus 700 may be or comprise controller 112, or in general any device or system configured to implement the functionality described herein. Although apparatus 700 is illustrated as a single device, it is appreciated that, wherever applicable, functions of apparatus 700 may be distributed to a plurality of devices.

Apparatus 700 may comprise at least one processor 702. The at least one processor 702 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 700 may further comprise at least one memory 704. The at least one memory 704 may be configured to store, for example, computer program code or the like, for example operating system software and application software. The at least one memory 704 may comprise one or more volatile memory devices, one or more non-volatile memory devices, and/or a combination thereof. For example, the memory may be embodied as magnetic storage devices (such as hard disk drives, etc.), optical magnetic storage devices, or semiconductor memories (such as mask ROM, PROM (programmable ROM), EPROM (erasable PROM), flash ROM, RAM (random access memory), etc.). Memory 704 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM). The at least one memory 704 may be also embodied separate from apparatus 700, for example as a computer readable (storage) medium, examples of which include memory sticks, compact discs (CD), or the like.

When apparatus 700 is configured to implement some functionality, some component and/or components of apparatus 700, such as for example the at least one processor 702 and/or the at least one memory 704, may be configured to implement this functionality. Furthermore, when the at least one processor 702 is configured to implement some functionality, this functionality may be implemented using program code 706 comprised, for example, in the at least one memory 704.

The functionality described herein may be performed, at least in part, by one or more computer program product components such as software components. According to an example embodiment, apparatus 700 comprises a processor or processor circuitry, such as for example a microcontroller, configured by program code 706, when executed, to execute the embodiments of the operations and functionality described herein. Program code 706 is provided as an example of instructions which, when executed by the at least one processor 702, cause performance of apparatus 700.

For example, functionality of controller 112 may be at least partially implemented as program code configured to cause apparatus 700 to perform functionality of controller 112. Similarly, transmission or reception of data, e.g., sensor data signals or control signals, over an internal or external communication interface of underground drill rig 100 may be controlled by software.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), neural processing unit (NPU), tensor processing unit (TPU), or the like.

Apparatus 700 may comprise a communication interface 708 configured to enable apparatus 700 to transmit and/or receive information. Communication interface 708 may comprise an internal or external communication interface, such as for example a wireless communication interface (radio interface) or wired communication interface.

Apparatus 700 may further comprise other components and/or functions such as for example a user interface (not shown) comprising at least one input device and/or at least one output device. The input device may take various forms such as a keyboard, a touch screen, or one or more embedded control buttons, joysticks, or other type of manual controllers. The output device may for example comprise a display, a speaker, or the like. The user interface may be configured to enable a human operator to monitor various functions, data, or the like.

Apparatus 700 may be configured to perform or cause performance of any aspect of the method(s) described herein. Further, a computer program, a computer program product, or a (non-transitory) computer readable memory may comprise instructions for causing, when executed by apparatus 700, apparatus 700 to perform any aspect of the method(s) described herein. Further, apparatus 700 may comprise means for performing any aspect of the method(s) described herein. In one example, the means comprises the at least one processor 702, the at least one memory 704 including program code 706 (instructions) configured to, when executed by the at least one processor 702, cause apparatus 700 to perform the method(s). In general, computer program instructions may be executed on means providing generic processing functions. Such means may be embedded for example in a computer, a server, or the like. The method(s) may be thus computer-implemented, for example based algorithm(s) executable by the generic processing functions, an example of which is the at least one processor 702. Apparatus 700 may comprise means for transmitting or receiving information, for example one or more wired or wireless (e.g., radio) transmitters or receivers, which may be coupled or be configured to be coupled to one or more antennas, or transmitter(s) or receiver(s) of a wired communication interface.

According to a first aspect, an apparatus for controlling a mining machine is disclosed. The apparatus may comprise: at least one processor; and at least one memory including computer program code, the at least one memory and the computer program code configured to, with the at least one processor, cause the apparatus at least to: receive an inertial measurement signal from a sensor of the mining machine; determine a motional status of the mining machine indicative of whether at least one part of the mining machine is stationary; and perform calibration of the inertial measurement signal, in response to determining that the motional status of the mining machine is indicative of the sensor being stationary.

According to an example embodiment of the first aspect, the at least one memory and the computer program are code configured to, with the at least one processor, cause the apparatus to: determine the motional status based on at least one control signal provided by control circuitry of the mining machine, determine the motional status based on absence of at least one other control signal configured to be provided by the control circuitry of the mining machine, or determine the motional status based on at least one sensor signal received from at least one other sensor of the mining machine.

According to an example embodiment of the first aspect, the calibration of the inertial measurement signal comprises provision of a zero-velocity signal to a calibration algorithm.

According to an example embodiment of the first aspect, the sensor comprises a gyroscope and the inertial measurement signal is an output signal of the gyroscope.

According to an example embodiment of the first aspect, the sensor is located on a tool of the mining machine.

According to an example embodiment of the first aspect, the at least one memory and the computer program are code configured to, with the at least one processor, cause the apparatus to: determine a heading angle of the tool based on the inertial measurement signal.

According to an example embodiment of the first aspect, the mining machine comprises a drill rig, and/or the tool comprises a drilling unit.

According to an example embodiment of the first aspect, the tool is coupled to a boom of the mining machine.

According to an example embodiment of the first aspect, the at least one control signal is indicative of at least one hydraulic valve of the boom of the mining machine being inactive, or the at least one other control signal is indicative of at least one hydraulic valve of the boom of the mining machine being active.

According to an example embodiment of the first aspect, the at least one other sensor comprises at least one visual sensor, the at least one sensor signal comprises visual data captured by the at least one visual sensor, and the at least one memory and the computer program are code configured to, with the at least one processor, cause the apparatus to: detect motion of the boom of the mining machine relative to a carrier of the mining machine or environment of the mining machine based on the visual data.

According to an example embodiment of the first aspect, the at least one other sensor is configured to obtain scanning data of environment of the mining machine, and the at least one memory and the computer program are code configured to, with the at least one processor, cause the apparatus to: determine a point-cloud representation of the environment of the mining machine based on the scanning data; and detect motion of a representation of the boom in the point-cloud representation.

According to an example embodiment of the first aspect, the at least one other sensor comprises at least one of the following: an accelerometer located at a fixed relative position with respect to the sensor, an odometer configured to detect motion of a carrier of the mining machine, or a boom angle sensor coupled to the boom of the mining machine.

According to an example embodiment of the first aspect, the at least one memory and the computer program are code configured to, with the at least one processor, cause the apparatus to: control position, motion, or orientation of the mining machine, at least one component of the mining machine, or at least one tool of the mining machine based on the calibrated inertial measurement signal.

According to an example embodiment of the first aspect, the apparatus is external to the mining machine and configured to remotely control the mining machine.

FIG. 8 illustrates an example of a method for control a mining machine, according to a second aspect of the present disclosure. The method may comprise a computer-implemented method performed by, for example, apparatus 700 such as controller 112.

At 801, the method may comprise receiving an inertial measurement signal from a sensor of the mining machine.

At 802, the method may comprise determining a motional status of the mining machine indicative of whether at least one part of the mining machine is stationary.

At 803, the method may comprise performing calibration of the inertial measurement signal, in response to determining that the motional status of the mining machine is indicative of the sensor being stationary.

According to an example embodiment of the second aspect, the method comprises: determining the motional status based on at least one control signal provided by control circuitry of the mining machine, determining the motional status based on absence of at least one other control signal configured to be provided by the control circuitry of the mining machine, or determining the motional status based on at least one sensor signal received from at least one other sensor of the mining machine.

According to an example embodiment of the second aspect, the calibration of the inertial measurement signal comprises provision of a zero-velocity signal to a calibration algorithm.

According to an example embodiment of the second aspect, the sensor comprises a gyroscope and the inertial measurement signal is an output signal of the gyroscope.

According to an example embodiment of the second aspect, the sensor is located on a tool of the mining machine.

According to an example embodiment of the second aspect, the method comprises: determining a heading angle of the tool based on the inertial measurement signal.

According to an example embodiment of the second aspect, the mining machine comprises a drill rig, and/or the tool comprises a drilling unit.

According to an example embodiment of the second aspect, the tool is coupled to a boom of the mining machine.

According to an example embodiment of the second aspect, the at least one control signal is indicative of at least one hydraulic valve of the boom of the mining machine being inactive, or the at least one other control signal is indicative of at least one hydraulic valve of the boom of the mining machine being active.

According to an example embodiment of the second aspect, the at least one other sensor comprises at least one visual sensor, the at least one sensor signal comprises visual data captured by the at least one visual sensor, and the method comprises: detecting motion of the boom of the mining machine relative to a carrier of the mining machine or environment of the mining machine based on the visual data.

According to an example embodiment of the second aspect, the method comprises: obtaining, by the at least one sensor, scanning data of environment of the mining machine; determining a point-cloud representation of the environment of the mining machine based on the scanning data; and detecting motion of a representation of the boom in the point-cloud representation.

According to an example embodiment of the second aspect, the at least one other sensor comprises at least one of the following: an accelerometer located at a fixed relative position with respect to the sensor, an odometer configured to detect motion of a carrier of the mining machine, or a boom angle sensor coupled to the boom of the mining machine.

According to an example embodiment of the second aspect, the method comprises: controlling position, motion, or orientation of the mining machine, at least one component of the mining machine, or at least one tool of the mining machine based on the calibrated inertial measurement signal.

According to an example embodiment of the second aspect, the method is performed by an apparatus located external to the mining machine.

According to a third aspect, an apparatus may comprise means for receiving an inertial measurement signal from a sensor of the mining machine; means for determining a motional status of the mining machine indicative of whether at least one part of the mining machine is stationary; and means for performing calibration of the inertial measurement signal, in response to determining that the motional status of the mining machine is indicative of the sensor being stationary. The apparatus may comprise means for performing any example embodiment of the method of the second aspect.

According to a fourth aspect, a computer program, a computer program product, or a (non-transitory) computer-readable medium may comprise program instructions which, when executed by an apparatus, cause the apparatus at least to receive an inertial measurement signal from a sensor of the mining machine; determine a motional status of the mining machine indicative of whether at least one part of the mining machine is stationary; and perform calibration of the inertial measurement signal, in response to determining that the motional status of the mining machine is indicative of the sensor being stationary. The computer program, the computer program product, or the (non-transitory) computer-readable medium may comprise program instructions which, when executed by an apparatus, cause the apparatus to perform any example embodiment of the method of the second aspect.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Term "or" may be understood to also cover a case where both of the items separated by "or" are included. Hence, "or" may be understood as an inclusive "or" rather than an exclusive "or".

Although subjects may be referred to as 'first' or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of the appended claims.

## Claims

1. An apparatus (112, 500, 700) for controlling a mining machine, the apparatus (112, 500, 700) comprising:
at least one processor (702); and
at least one memory (704) including computer program code (706), the at least one memory (704) and the computer program code (706) configured to, with the at least one processor (702), cause the apparatus (112, 500, 700) at least to:
receive an inertial measurement signal from a sensor (116, 118) of the mining machine;
determine a motional status of the mining machine indicative of whether at least one part of the mining machine is stationary; and
perform calibration of the inertial measurement signal, in response to determining that the motional status of the mining machine is indicative of the sensor being stationary.

2. The apparatus (112, 500, 700) according to claim 1, wherein the at least one memory (704) and the computer program code (706) are further configured to, with the at least one processor (702), cause the apparatus (112, 500, 700) to:
determine the motional status based on at least one control signal provided by control circuitry of the mining machine,
determine the motional status based on absence of at least one other control signal configured to be provided by the control circuitry of the mining machine, or
determine the motional status based on at least one sensor signal received from at least one other sensor of the mining machine.

3. The apparatus (112, 500, 700) according to claim 1 or 2, wherein the calibration of the inertial measurement signal comprises provision of a zero-velocity signal to a calibration algorithm.

4. The apparatus (112, 500, 700) according to any of claims 1 to 3, wherein the sensor comprises a gyroscope and the inertial measurement signal is an output signal of the gyroscope.

5. The apparatus (112, 500, 700) according to any of claims 1 to 4, wherein the sensor is located on a tool of the mining machine.

6. The apparatus (112, 500, 700) according to claim 5, wherein the at least one memory (704) and the computer program code (706) are further configured to, with the at least one processor (702), cause the apparatus (112, 500, 700) to:
determine a heading angle of the tool based on the inertial measurement signal.

7. The apparatus (112, 500, 700) according to claim 5 or 6, wherein the mining machine comprises a drill rig (100), and/or wherein the tool comprises a drilling unit (130).

8. The apparatus (112, 500, 700) according to any of claims 5 to 7, wherein the tool is coupled to a boom (120) of the mining machine.

9. The apparatus (112, 500, 700) according to claims 2 and 8, wherein the at least one control signal is indicative of at least one hydraulic valve of the boom (120) of the mining machine being inactive, or wherein the at least one other control signal is indicative of at least one hydraulic valve of the boom (120) of the mining machine being active.

10. The apparatus (112, 500, 700) according to claim 2 and any of claims 8 to 9, wherein the at least one other sensor comprises at least one visual sensor, wherein the at least one sensor signal comprises visual data captured by the at least one visual sensor, and wherein the at least one memory (704) and the computer program code (706) are further configured to, with the at least one processor (702), cause the apparatus (112, 500, 700) to:
detect motion of the boom (120) of the mining machine relative to a carrier (110) of the mining machine or environment of the mining machine based on the visual data.

11. The apparatus (112, 500, 700) according to claim 2 and any of claims 8 to 9, wherein the at least one other sensor is configured to obtain scanning data of environment of the mining machine (100), and wherein the at least one memory (704) and the computer program code (706) are further configured to, with the at least one processor (702), cause the apparatus (112, 500, 700) to:
determine a point-cloud representation of the environment of the mining machine based on the scanning data; and
detect motion of a representation of the boom (120) in the point-cloud representation.

12. The apparatus (112, 500, 700) according to claim 2 and any of claims 3 to 9, wherein the at least one other sensor comprises at least one of the following:
an accelerometer located at a fixed relative position with respect to the sensor,
an odometer configured to detect motion of a carrier (110) of the mining machine, or
a boom angle sensor coupled to the boom (120) of the mining machine.

13. The apparatus (112, 500, 700) according to any of claims 1 to 12, wherein the at least one memory (704) and the computer program code (706) are further configured to, with the at least one processor (702), cause the apparatus (112, 500, 700) to:
control position, motion, or orientation of the mining machine, at least one component of the mining machine, or at least one tool of the mining machine based on the calibrated inertial measurement signal.

14. A method for controlling a mining machine, the method comprising:
receiving (801) an inertial measurement signal from a sensor of the mining machine (100);
determining (802) a motional status of the mining machine indicative of whether at least one part of the mining machine is stationary; and
performing (803) calibration of the inertial measurement signal, in response to determining that the motional status of the mining machine is indicative of the sensor being stationary.

15. A computer program (706) for controlling a mining machine, the computer program comprising instructions which, when executed by an apparatus (112, 500, 700), cause the apparatus (112, 500, 700) at least to:
receive an inertial measurement signal from a sensor of the mining machine;
determine a motional status of the mining machine indicative of whether at least one part of the mining machine is stationary; and
perform calibration of the inertial measurement signal, in response to determining that the motional status of the mining machine is indicative of the sensor being stationary.

## Patentansprüche

1. Einrichtung (112, 500, 700) zum Steuern einer Bergbaumaschine, wobei die Einrichtung (112, 500, 700) Folgendes umfasst:
mindestens einen Prozessor (702); und
mindestens einen Speicher (704), der einen Computerprogrammcode (706) beinhaltet, wobei der mindestens eine Speicher (704) und der Computerprogrammcode (706) konfiguriert sind, mit dem mindestens einen Prozessor (702) die Einrichtung (112, 500, 700) zu veranlassen, mindestens:
ein Trägheitsmesssignal von einem Sensor (116, 118) der Bergbaumaschine zu empfangen;
einen Bewegungszustand der Bergbaumaschine zu bestimmen, der angibt, ob mindestens ein Teil der Bergbaumaschine stillsteht; und
eine Kalibrierung des Trägheitsmesssignals durchzuführen, nachdem bestimmt wurde, dass der Bewegungszustand der Bergbaumaschine angibt, dass der Sensor stillsteht.

2. Einrichtung (112, 500, 700) nach Anspruch 1, wobei der mindestens eine Speicher (704) und der Computerprogrammcode (706) ferner konfiguriert sind, mit dem mindestens einen Prozessor (702) die Einrichtung (112, 500, 700) zu veranlassen:
den Bewegungszustand auf Basis mindestens eines Steuersignals, das von einer Steuerschaltung der Bergbaumaschine bereitgestellt wird, zu bestimmen,
den Bewegungszustand auf Basis des Fehlens mindestens eines anderen Steuersignals zu bestimmen, das konfiguriert ist, von der Steuerschaltung der Bergbaumaschine bereitgestellt zu werden, oder
den Bewegungszustand auf Basis mindestens eines Sensorsignals zu bestimmen, das von mindestens einem anderen Sensor der Bergbaumaschine empfangen wird.

3. Einrichtung (112, 500, 700) nach Anspruch 1 oder 2, wobei die Kalibrierung des Trägheitsmesssignals Bereitstellung eines Nullgeschwindigkeitssignals für einen Kalibrierungsalgorithmus umfasst.

4. Einrichtung (112, 500, 700) nach einem der Ansprüche 1 bis 3, wobei der Sensor ein Gyroskop umfasst und das Trägheitsmesssignal ein Ausgangssignal des Gyroskops ist.

5. Einrichtung (112, 500, 700) nach einem der Ansprüche 1 bis 4, wobei der Sensor an einem Werkzeug der Bergbaumaschine angeordnet ist.

6. Einrichtung (112, 500, 700) nach Anspruch 5, wobei der mindestens eine Speicher (704) und der Computerprogrammcode (706) ferner konfiguriert sind, mit dem mindestens einen Prozessor (702) die Einrichtung (112, 500, 700) zu veranlassen:
einen Kurswinkel des Werkzeugs auf Basis des Trägheitsmesssignals zu bestimmen.

7. Einrichtung (112, 500, 700) nach Anspruch 5 oder 6, wobei die Bergbaumaschine ein Bohrgerät (100) umfasst und/oder wobei das Werkzeug eine Bohreinheit (130) umfasst.

8. Einrichtung (112, 500, 700) nach einem der Ansprüche 5 bis 7, wobei das Werkzeug mit einem Ausleger (120) der Bergbaumaschine gekoppelt ist.

9. Einrichtung (112, 500, 700) nach den Ansprüchen 2 und 8, wobei das mindestens eine Steuersignal angibt, dass mindestens ein Hydraulikventil des Auslegers (120) der Bergbaumaschine inaktiv ist, oder wobei das mindestens eine andere Steuersignal angibt, dass mindestens ein Hydraulikventil des Auslegers (120) der Bergbaumaschine aktiv ist.

10. Einrichtung (112, 500, 700) nach Anspruch 2 und einem der Ansprüche 8 bis 9, wobei der mindestens eine andere Sensor mindestens einen visuellen Sensor umfasst, wobei das mindestens eine Sensorsignal visuelle Daten umfasst, die von dem mindestens einen visuellen Sensor erfasst wurden, und wobei der mindestens eine Speicher (704) und der Computerprogrammcode (706) ferner konfiguriert sind, mit dem mindestens einen Prozessor (702) die Einrichtung (112, 500, 700) zu veranlassen:
Bewegung des Auslegers (120) der Bergbaumaschine relativ zu einem Träger (110) der Bergbaumaschine oder der Umgebung der Bergbaumaschine auf Basis der visuellen Daten zu detektieren.

11. Einrichtung (112, 500, 700) nach Anspruch 2 und einem der Ansprüche 8 bis 9, wobei der mindestens eine Sensor konfiguriert ist, Scandaten einer Umgebung der Bergbaumaschine (100) zu erhalten, und wobei der mindestens eine Speicher (704) und der Computerprogrammcode (706) ferner konfiguriert sind, mit dem mindestens einen Prozessor (702) die Einrichtung (112, 500, 700) zu veranlassen:
eine Punktwolkendarstellung der Umgebung der Bergbaumaschine auf Basis der Scandaten zu bestimmen; und
Bewegung einer Darstellung des Auslegers (120) in der Punktwolkendarstellung zu detektieren.

12. Einrichtung (112, 500, 700) nach Anspruch 2 und einem der Ansprüche 3 bis 9, wobei der mindestens eine andere Sensor mindestens eines der folgenden Elemente umfasst:
einen Beschleunigungsmesser, der sich in einer festen relativen Position in Bezug auf den Sensor befindet,
einen Wegstreckenzähler, der so konfiguriert ist, dass er Bewegung eines Trägers (110) der Bergbaumaschine detektiert, oder
einen Auslegerwinkelsensor, der mit dem Ausleger (120) der Bergbaumaschine gekoppelt ist.

13. Einrichtung (112, 500, 700) nach einem der Ansprüche 1 bis 12, wobei der mindestens eine Speicher (704) und der Computerprogrammcode (706) ferner konfiguriert sind, mit dem mindestens einen Prozessor (702) die Einrichtung (112, 500, 700) zu veranlassen:
Position, Bewegung oder Orientierung der Bergbaumaschine, mindestens einer Komponente der Bergbaumaschine oder mindestens eines Werkzeugs der Bergbaumaschine auf Basis des kalibrierten Trägheitsmesssignals zu steuern.

14. Verfahren zum Steuern einer Bergbaumaschine, wobei das Verfahren umfasst:
Empfangen (801) eines Trägheitsmesssignals von einem Sensor der Bergbaumaschine (100);
Bestimmen (802) eines Bewegungszustands der Bergbaumaschine, der angibt, ob mindestens ein Teil der Bergbaumaschine stillsteht; und
Durchführen (803) einer Kalibrierung des Trägheitsmesssignals, nachdem bestimmt wurde, dass der Bewegungszustand der Bergbaumaschine angibt, dass der Sensor stillsteht.

15. Computerprogramm (706) zum Steuern einer Bergbaumaschine, wobei das Computerprogramm Anweisungen umfasst, die, wenn sie von einer Einrichtung (112, 500, 700) ausgeführt werden, die Einrichtung (112, 500, 700) veranlassen, mindestens:
ein Trägheitsmesssignal von einem Sensor der Bergbaumaschine zu empfangen;
einen Bewegungszustand der Bergbaumaschine zu bestimmen, der angibt, ob mindestens ein Teil der Bergbaumaschine stillsteht; und
eine Kalibrierung des Trägheitsmesssignals durchzuführen, nachdem bestimmt wurde, dass der Bewegungszustand der Bergbaumaschine angibt, dass der Sensor stillsteht.

## Revendications

1. Appareil (112, 500, 700) pour la commande d'une machine d'exploitation minière, l'appareil (112, 500, 700) comprenant :
au moins un processeur (702) ; et
au moins une mémoire (704) incluant un code de programme informatique (706), la au moins une mémoire (704) et le code de programme informatique (706) étant configurés, avec le au moins un processeur (702), pour amener l'appareil (112, 500, 700) au moins à :
recevoir un signal de mesure inertielle provenant d'un capteur (116, 118) de la machine d'exploitation minière ;
déterminer un état de mouvement de la machine d'exploitation minière, indiquant si au moins une partie de la machine d'exploitation minière est immobile ; et
réaliser un étalonnage du signal de mesure inertielle, en réponse à la détermination que l'état de mouvement de la machine d'exploitation minière indique que le capteur est immobile.

2. Appareil (112, 500, 700) selon la revendication 1, dans lequel la au moins une mémoire (704) et le code de programme informatique (706) sont en outre configurés, avec le au moins un processeur (702), pour amener l'appareil (112, 500, 700) au moins à :
déterminer l'état de mouvement sur la base au moins d'un signal de commande fourni par une circuiterie de commande de la machine d'exploitation minière,
déterminer l'état de mouvement sur la base de l'absence d'au moins un autre signal de commande configuré pour être fourni par la circuiterie de commande de la machine d'exploitation minière, ou
déterminer l'état de mouvement sur la base d'au moins un signal de capteur reçu d'au moins un autre capteur de la machine d'exploitation minière.

3. Appareil (112, 500, 700) selon la revendication 1 ou 2, dans lequel l'étalonnage du signal de mesure inertielle comprend la fourniture d'un signal de vitesse nulle à un algorithme d'étalonnage.

4. Appareil (112, 500, 700) selon l'une quelconque des revendications 1 à 3, dans lequel le capteur comprend un gyroscope et le signal de mesure inertielle est un signal de sortie du gyroscope.

5. Appareil (112, 500, 700) selon l'une quelconque des revendications 1 à 4, dans lequel le capteur est situé sur un outil de la machine d'exploitation minière.

6. Appareil (112, 500, 700) selon la revendication 5, dans lequel la au moins une mémoire (704) et le code de programme informatique (706) sont en outre configurés, avec le au moins un processeur (702), pour amener l'appareil (112, 500, 700) à :
déterminer l'angle de cap de l'outil sur la base du signal de mesure inertielle.

7. Appareil (112, 500, 700) selon la revendication 5 ou 6, dans lequel la machine d'exploitation minière comprend une foreuse (100), et/ou dans lequel l'outil comprend une unité de forage (130).

8. Appareil (112, 500, 700) selon l'une quelconque des revendications 5 à 7, dans lequel l'outil est couplé à une flèche (120) de la machine d'exploitation minière.

9. Appareil (112, 500, 700) selon les revendications 2 et 8, dans lequel le au moins un signal de commande indique qu'au moins une vanne hydraulique de la flèche (120) de la machine d'exploitation minière est inactive, ou dans lequel le au moins un autre signal de commande indique qu'au moins une vanne hydraulique de la flèche (120) de la machine d'exploitation minière est active.

10. Appareil (112, 500, 700) selon la revendication 2 et l'une quelconque des revendications 8 et 9, dans lequel le au moins un autre capteur comprend au moins un capteur visuel, dans lequel le au moins un signal de capteur comprend des données visuelles capturées par le au moins un capteur visuel, et dans lequel la au moins une mémoire (704) et le code de programme informatique (706) sont en outre configurés, avec le au moins un processeur (702), pour amener l'appareil (112, 500, 700) à :
détecter un mouvement de la flèche (120) de la machine d'exploitation minière par rapport à un porteur (110) de la machine d'exploitation minière ou à l'environnement de la machine d'exploitation minière sur la base des données visuelles.

11. Appareil (112, 500, 700) selon la revendication 2 et l'une quelconque des revendications 8 et 9, dans lequel le au moins un autre capteur est configuré pour obtenir des données de balayage d'un environnement de la machine d'exploitation minière (100), et dans lequel la au moins une mémoire (704) et le code de programme informatique (706) sont en outre configurés, avec le au moins un processeur (702), pour amener l'appareil (112, 500, 700) à :
déterminer une représentation sous forme de nuage de points de l'environnement de la machine d'exploitation minière sur la base des données de balayage ; et
détecter un mouvement d'une représentation de la flèche (120) dans la représentation sous forme de nuage de points.

12. Appareil (112, 500, 700) selon la revendication 2 et l'une quelconque des revendications 3 à 9, dans lequel le au moins un autre capteur comprend au moins l'un parmi :
un accéléromètre situé à une position relative fixe par rapport au capteur,
un odomètre configuré pour détecter un mouvement d'un porteur (110) de la machine d'exploitation minière, ou
un capteur d'angle de flèche couplé à la flèche (120) de la machine d'exploitation minière.

13. Appareil (112, 500, 700) selon l'une quelconque des revendications 1 à 12, dans lequel la au moins une mémoire (704) et le code de programme informatique (706) sont en outre configurés, avec le au moins un processeur (702), pour amener l'appareil (112, 500, 700) à :
commander la position, le mouvement ou l'orientation de la machine d'exploitation minière, d'au moins un composant de la machine d'exploitation minière ou d'au moins un outil de la machine d'exploitation minière sur la base du signal de mesure inertielle étalonné.

14. Procédé de commande d'une machine d'exploitation minière, le procédé comprenant :
la réception (801) d'un signal de mesure inertielle provenant d'un capteur de la machine d'exploitation minière (100) ;
la détermination (802) d'un état de mouvement de la machine d'exploitation minière indiquant si au moins une partie de la machine d'exploitation minière est immobile ; et
la réalisation (803) d'un étalonnage du signal de mesure inertielle, en réponse à la détermination que l'état de mouvement de la machine d'exploitation minière indique que le capteur est immobile.

15. Programme informatique (706) destiné à commander une machine d'exploitation minière, le programme informatique comprenant des instructions qui, lorsqu'elles sont exécutées par un appareil (112, 500, 700), amènent l'appareil (112, 500, 700) au moins à :
recevoir un signal de mesure inertielle provenant d'un capteur de la machine d'exploitation minière ;
déterminer un état de mouvement de la machine d'exploitation minière, indiquant si au moins une partie de la machine d'exploitation minière est immobile ; et
réaliser un étalonnage du signal de mesure inertielle, en réponse à la détermination que l'état de mouvement de la machine d'exploitation minière indique que le capteur est immobile.
